# EUROPÄISCHE PATENTSCHRIFT

(11) **EP 4 269 169 B1**
(45) Veröffentlichungstag und Bekanntmachung des Hinweises auf die Patenterteilung: **25.12.2024**
(21) Anmeldenummer: 23160164.2
(22) Anmeldetag: 06.03.2023
(51) Int. Cl.: B60M 1/28, B61L 23/04

(54) **VERFAHREN ZUR ZUSTANDSERFASSUNG EINER STRASSENSEITIGEN OBERLEITUNGSANLAGE**
METHOD FOR DETECTING THE STATE OF A ROADSIDE OVERHEAD LINE SYSTEM
PROCÉDÉ DE DÉTECTION DE L'ÉTAT D'UNE INSTALLATION DE CATÉNAIRE CÔTÉ ROUTE

(30) Priorität: 29.04.2022 DE 102022204216
(43) Veröffentlichungstag der Anmeldung: 01.11.2023
(73) Patentinhaber: Siemens Mobility GmbH, 81739 München (DE)
(72) Erfinder: Bühs, Florian, 10777 Berlin (DE); Hoppe, Christof, 48147 Münster (DE); Kluckner, Stefan, 12487 Berlin (DE); Molthan, Helge, 83075 Bad Feilnbach (DE)
(74) Vertreter: Siemens Patent Attorneys

(56) Entgegenhaltungen:
- DE-A1- 102020 207 963
- US-A1- 2019 392 225

## Beschreibung

Die Erfindung betrifft ein Verfahren zur Erfassung von Zustandsdaten einer entlang einer Straßenstrecke installierten, elektrischen Oberleitungsanlage.

Ein derartiges Verfahren wird zum Beispiel in der US 2019/392225 A1 offenbart.

Oberleitungsanlagen zur Versorgung von elektrisch angetriebenen Fahrzeugen mit Traktionsenergie während der Fahrt sind für Schienenfahrzeuge schon lange bekannt, werden aber in jüngerer Zeit auch für Straßenfahrzeuge getestet. Das Fahrzeug weist dabei einen Stromabnehmer auf, der zur Energieübertragung bei einem Schienenfahrzeug mit dem Fahrdraht einer einpoligen Oberleitungsanlage und bei einem Straßenfahrzeug mit den Fahrdrähten einer zweipoligen Oberleitungsanlage in Scheifkontakt steht. Aufgrund der festen Spurgebundenheit eines Schienenfahrzeugs werden Zustandsdaten der Oberleitungsanlage, etwa Lage und Verschleiß von Fahrdrähten, in vertikaler Richtung relativ zur Schienenkopfebene und in lateraler Richtung relativ zur Schienenmittelebene für schienengebundene Messfahrzeugen erfasst. Bei straßenseitigen Oberleitungsanlagen müssen Zustandsdaten manuell gemessen werden, was den Nachteil hat, dass während der Messung die Straßenstrecke nur eingeschränkt nutzbar ist.

Die Patentschrift DE 10 2017 214 479 B3 offenbart ein Verfahren zur Erfassung und Aktualisierung von in einem Transponder hinterlegten Streckenverlaufsdaten. Die Streckenverlaufsdaten umfassen eine Relativposition zwischen einer Fahrspur für ein Kraftfahrzeug und einer zu der Fahrspur vertikal beabstandeten Oberleitung. Das Kraftfahrzeug weist einen Stromabnehmer auf, welcher zur Übertragung elektrischer Energie für den Antrieb mit der an ein Stromnetz angeschlossenen Oberleitung in Schleifkontakt gebracht wird. Der Transponder ist an einem die Oberleitung tragenden Mast angeordnet, wobei die aktuellen Streckenverlaufsdaten bei Passage des Transponders von einer Lesevorrichtung des Kraftfahrzeugs ausgelesen und von einem Fahrerassistenzsystem verwendet werden, um den Stromabnehmer in eine zum Aufrechterhalten des Schleifkontaktes optimale Position zu verstellen und/oder damit das Anbügeln des Stromabnehmers an die Oberleitung zuverlässig stattfindet. Zur Erfassung der Streckenverlaufsdaten ist ein Messfahrzeug vorgesehen, an dem ein Messsystem mit einer Messvorrichtung und mit einer Auswerteeinheit angebracht ist. Als Messvorrichtung ist eine Kamera zur Vermessung der Fahrspur sowie ein Lidar zur Vermessung der Position der Oberleitung vorgesehen. Unter Zuhilfenahme einer weiteren Relativposition zwischen Kamera und Lidar ermittelt die Auswerteeinheit die Relativposition zwischen der Fahrspur und der Oberleitung. Das Messfahrzeug weist eine Schreibvorrichtung zum Übertragen der aktuellen Streckenverlaufsdaten an den Transponder auf. Die Auswerteeinheit führt einen Vergleich der aus den Messdaten gewonnenen aktuellen Streckenverlaufsdaten mit den im Transponder hinterlegten und ausgelesenen Streckenverlaufsdaten durch. Sofern ein Unterschied ermittelt wird, werden die aktuellen Streckenverlaufsdaten der Schreibvorrichtung zur Übertragung an den Transponder bereitgestellt.

Aus der Offenlegungsschrift DE 10 2020 207 963 A1 ist ein Verfahren zur Zustandsüberwachung einer entlang einer Fahrbahn angeordneten Oberleitungsanlage bekannt. Die Oberleitungsanlage weist zur Energieversorgung eines die Fahrbahn benutzenden, elektrisch oder hybridelektrisch angetriebenen Straßenfahrzeugs eine oberhalb der Fahrbahn verlaufende Oberleitung auf, die zur Energieeinspeisung durch einen Stromabnehmer des Straßenfahrzeugs kontaktierbar ist. Mittels eines Bildaufnahmesystems mit mindestens einer im Bereich der Fahrbahn installierten Videokamera werden Videobilddaten erfasst, welche die Oberleitungsanlage wenigstens ausschnittsweise repräsentieren, wobei aus den erfassten Videobilddaten ein Ist-Zustand der Oberleitungsanlage ermittelt wird. Mittels mindestens einer im Bereich der Fahrbahn installierten Wärmebildkamera des Bildaufnahmesystems werden Wärmebilddaten erfasst, welche die Oberleitungsanlage wenigstens ausschnittsweise repräsentieren, wobei aus den erfassten Wärmebilddaten ein Ist-Zustand der Oberleitungsanlage ermittelt wird. Die erfassten Videobilddaten und Wärmebilddaten werden an ein Bildwiedergabesystem in einer Überwachungszentrale übertragen, wobei die übertragenen Videobilddaten und Wärmebilddaten zur Ermittlung des Ist-Zustands der Oberleitungsanlage auf einem Bildschirm des Bildwiedergabesystems dargestellt werden. Die erfassten Videobilddaten und Wärmebilddaten werden an ein Bildauswertungssystem zur automatisierten Bildanalyse übertragen, wobei die übertragenen Videobilddaten und Wärmebilddaten zur Ermittlung des Ist-Zustands der Oberleitungsanlage mittels trainierter Bildauswertungsalgorithmen analysiert werden. Mittels der Bildauswertungsalgorithmen wird eine Abweichung des ermittelten Ist-Zustands der Oberleitungsanlage von in einer Datenbank des Bildauswertungssystems gespeicherten Soll-Zuständen der Oberleitungsanlage berechnet. In der Datenbank sind Soll-Zustände der Oberleitungsanlage für unterschiedliche Betriebsparameter, wie Stromstärke, Spannung oder Leistung in der Oberleitung oder in einem Unterwerk der Oberleitungsanlage, und für unterschiedliche Umgebungsparameter, wie Lufttemperatur, Windgeschwindigkeit oder dergleichen, gespeichert. Dabei werden die zur Ermittlung der Abweichung herangezogenen Soll-Zustände der Oberleitungsanlage in Abhängigkeit von gemessenen Betriebs- und Umgebungsparametern ausgewählt. Als Ist-Zustand werden eine Ruhelage, ein Schwingungsverhalten von Streckenkomponenten der Oberleitungsanlage, insbesondere von Kettenwerken, Quertrageinrichtungen, Hängersäulen, Spannvorrichtungen, Streckentrennern und Masten der Oberleitungsanlage, ermittelt. Anhand des ermittelten Ist-Zustandes und anhand der ermittelten Abweichung des Ist-Zustandes von einem der Soll-Zustände wird automatisiert eine Zustandsmeldung über festgestellten Verschleiß oder eine festgestellte Störung ausgelöst.

Die bekannten Verfahren sind aufgrund der Unkenntnis oder Ungenauigkeit der exakten Messpositionen des Messfahrzeugs, von welchen die Zustandsdaten der Oberleitungsanlage erfasst werden, für einen automatisierten Vergleich mit historischen Zustandsdaten, wie sie im Falle der DE 10 2017 214 479 B3 in einem Transponder oder im Falle der DE 10 2020 207 963 A1 in einer Datenbank abgespeichert sind, nicht geeignet. Der Erfindung liegt daher die Aufgabe zugrunde, ein gattungsgemäßes Verfahren bereitzustellen, welches die Nachteile des Standes der Technik überwindet.

Das eingangs genannte Verfahren ist zur Erfassung von Zustandsdaten einer entlang einer Straßenstrecke installierten, elektrischen Oberleitungsanlage ausgebildet und vorgesehen. Die Oberleitungsanlage ist zur Energieübertragung durch einen Stromabnehmer eines die Straßenstrecke befahrenden, elektrisch oder hybrid-elektrisch angetriebenen Straßenfahrzeugs kontaktierbar. Die Oberleitung ist zweipolig ausgebildet und weist je Kontaktpol ein an seitlich der Fahrbahn aufgestellten Masten hängende Kettenwerke aus Tragseilen und Fahrdrähten auf. Die Kettenwerke sind mittels an den Masten befestigten Auslegern oberhalb eines elektrifizierten Fahrstreifens der Fahrbahn gehalten, so dass der Stromabnehmer eines den Fahrstreifen befahrenden Straßenfahrzeugs in Schleifkontakt mit den Fahrdrähten bringbar ist. Hierzu kann der Stromabnehmer als Pantograph ausgebildet sein, der aus einer abgesenkten Ruheposition mittels einer Hubeinrichtung in eine aufgestellten Kontaktposition bringbar und gegen die Fahrdrähte pressbar ist. Unterwerke versorgen Speiseabschnitte der Oberleitungsanlage mit der gewünschten Spannung, vorzugsweise Gleichspannung. Mittels einer Sensoreinrichtung eines die Straßenstrecke abfahrenden Messfahrzeugs werden an Messpositionen jeweils dreidimensionale Lagedaten von eine Fahrzeugumgebung repräsentierenden Umgebungspunkten erfasst. Die Lagedaten eines Umgebungspunktes, beispielsweise einer Fahrdrahtstelle der Oberleitungsanlage, geben die Lage des Umgebungspunktes in einem dreidimensionalen Sensorkoordinatensystem an.

Erfindungsgemäß werden mittels einer satellitengestützten Positionsbestimmungseinrichtung des Messfahrzeugs zusätzlich Ortskoordinaten der Messpositionen bestimmt. Als Positionsbestimmungseinrichtung eignen sich Empfangsgeräte des Global Positioning Systems, kurz GPS, oder vergleichbarer Systeme, mit welchen die Messpositionen auf etwa 30 m ± 10 m genau bestimmt werden können. Als Ortskoordinaten können die geografischen Koordinaten, also geografische Länge und Breite, des im Messfahrzeug mitgeführten und an der Messposition befindlichen GPS-Empfangsgeräts im WGS84-Bezugssystem ( engl. World Geodetic System 1984) bestimmt werden.

Durch Zuordnung der Ortskoordinaten einer Messposition zu den an dieser Messposition erfassten Lagedaten wird eine Umgebungspunktwolke mit Geokoordinaten der erfassten Umgebungspunkte erzeugt. Umgebungspunkte können beispielsweise auf Begrenzungsflächen sowie deren Kanten, Ecken oder sonstigen Begrenzungslinien von Umgebungsobjekten liegen, welche von der Sensoreinrichtung ausgesandte Strahlungsimpulse reflektieren. Als Sensoreinrichtung können beispielsweise ein oder mehrere Lidar-Sensoren (engl. Light Detection and Ranging), Laufzeit-Kameras (engl. Time of Flight) oder Radar-Sensoren (engl. Radio Detection and Ranging) eingesetzt werden. Von den Umgebungspunkten werden Lagedaten im Sensorkoordinatensystem, beispielsweise in durch Abstand, Azimutal- und Polarwinkel gekennzeichneten Polarkoordinaten, erfasst. Die von einer Messposition aus erfassbaren Umgebungsobjekte werden so durch eine dichte Umgebungspunktwolke dargestellt, deren Geokoordinaten durch Zuordnung der Ortskoordinaten der Messposition zu den sensoriell erfassten Lagedaten der Umgebungspunkte gebildet werden.

Mittels einer Objekterkennungseinrichtung werden aus den Geokoordinaten der erzeugten Umgebungspunktwolke ein oder mehrere in der Fahrzeugumgebung präsente, ortsfeste Referenzobjekte mit bekannten Referenzkoordinaten und ein oder mehrere in der Fahrzeugumgebung präsente Anlagenobjekte der Oberleitungsanlage erkannt. Die Objekterkennungseinrichtung kann beispielsweise durch eine trainierte künstliche Intelligenz gebildet sein. Als Trainingsdaten dienen bekannte Anlagen- und Referenzobjekte, die durch computerbasiertes Sehen anhand der Geokoordinaten in einer erfassten Umgebungspunktwolke wiedererkannt werden. Als Referenzobjekte dienen ortsfeste, eindeutig erkennbare Objekte, wie auffällige Strukturen oder sonstige Landmarken, deren Referenzkoordinaten etwa auf 5 cm bis 50 cm genau bekannt sind.

Es werden eine Abweichung der Geokoordinaten der einem erkannten Referenzobjekt zugeordneten Umgebungspunkte von dessen Referenzkoordinaten ermittelt und die Geokoordinaten von Umgebungspunkten der Umgebungspunktwolke um die ermittelte Abweichung korrigiert. Durch diese Korrektur wird die Genauigkeit der Geokoordinaten erheblich - bis zu einem Faktor 100 - verbessert. Mittels der Objekterkennungseinrichtung werden aus den korrigierten Geokoordinaten der Anlagenobjekte Zustandsdaten der Anlagenobjekte ermittelt. Die hohe Genauigkeit der korrigierten Geokoordinaten bildet die Basis für einen automatisierten Vergleich von aktuell erfassten Zustandsdaten der Oberleitungsanlage, beispielsweise mit vordefinierten Soll-Zustandsdaten oder mit früher erfassten Zustandsdaten.

In einer vorteilhaften Ausführungsform des erfindungsgemäßen Verfahrens werden Zustandsdaten eines Anlagenobjekts aus einem Vergleich der korrigierten Geokoordinaten des Anlagenobjekts mit vordefinierten Soll-Zustandsdaten des Anlagenobjekts ermittelt. Vordefinierte Soll-Zustandsdaten von Anlagenobjekten der Oberleitungsanlage können zu jeder Messposition Geokoordinaten der an der jeweiligen Messposition sensoriell erfassbaren Anlagenobjekte beinhalten, die beispielsweise durch Planungsdaten für die Errichtung der Oberleitungsanlage definiert sind. Als Zustandsdaten von Anlageobjekten können zum Beispiel Geokoordinaten von Masten, der Fahrdrahtlagen, von Spanneinrichtungspositionen, und dergleichen in Betracht gezogen werden.

In einer weiteren vorteilhaften Ausführungsform des erfindungsgemäßen Verfahrens werden Zustandsdaten eines Anlagenobjekts aus einem Vergleich der korrigierten Geokoordinaten des Anlagenobjekts mit in einer früheren Messfahrt aufgenommenen korrigierten Geokoordinaten dieses Anlagenobjekts ermittelt. Durch die Referenzkoordinaten-gestützte Korrektur der Geokoordinaten von Anlagenobjekten können Zustandsdaten eines Anlagenobjekts an einer Messposition miteinander verglichen werden, die aus unterschiedlichen Messfahrten gewonnen wurden. So können Veränderungen von Positionen und Formen von Anlagenobjekten, beispielsweise dem Durchhang und dem Verschleißbild eines Fahrdrahtes, ermittelt werden.

In einer weiteren vorteilhaften Ausführungsform des erfindungsgemäßen Verfahrens werden mittels der Objekterkennungseinrichtung aus den Geokoordinaten der erzeugten Umgebungspunktwolke ein oder mehrere Fahrbahnmarkierungsobjekte der Straßenstrecke erkannt. Dabei werden die korrigierten Geokoordinaten der Fahrbahnmarkierungsobjekte als Bezugslinie für die Zustandsdaten der Anlagenobjekte verwendet. Auf der Fahrbahn aufgebrachte Fahrbahnmarkierungen, etwa den elektrifizierten Fahrstreifen begrenzende Seiten- oder Mittellinien, bilden an ihren Rändern Materialstufen geringer Höhe, deren Lagedaten sensoriell erfassbar sind. Ähnlich der Gleismitte im Schienenverkehr können die an einer Messposition ermittelten Zustandsdaten von Anlagenobjekten in Bezug zur Fahrbahnmarkierung gesetzt werden. Beispielsweise können die Seitenlagen der Fahrdrähte relativ zur Seitenlinie des elektrifizierten Fahrstreifens oder die Fahrdrahthöhen über Fahrstreifenniveau angegeben und mit Zustandsdaten aus anderen Messfahrten verglichen werden.

In einer weiteren vorteilhaften Ausführungsform des erfindungsgemäßen Verfahrens werden als Referenzobjekte Masten der Oberleitungsanlage und/oder die Straßenstrecke überspannende Brücken und/oder Rückhaltesysteme der Straßenstrecke erkannt. Tragende Konstruktionselemente der Oberleitungsanlage, wie deren Masten, aber auch Infrastruktureinrichtungen an der Straßenstrecke, wie Brückenbauwerke, Rückhaltesysteme sowie Straßenschilder und deren Masten, sind annähernd unbeweglich und haben wohlbekannte Errichtungsorte, weshalb sie sich besonders als Referenzobjekte eignen. Die Koordinaten von markanten und sensoriell gut erfassbaren Ecken, Kanten oder Begrenzungen dieser Referenzobjekte werden insbesondere als deren Referenzkoordinaten herangezogen.

In einer weiteren vorteilhaften Ausführungsform des erfindungsgemäßen Verfahrens werden als Zustandsdaten eine Lage und/oder ein Verschleiß und/oder ein Defekt und/oder ein Verlust eines Anlagenobjekts der Oberleitungsanlage ermittelt. Mit den korrigierten Geokoordinaten der Umgebungspunkte stellt die Umgebungspunktwolke ein digitales Abbild oder einen digitalen Zwilling der Anlagenobjekte an einer Messposition mit hoher Lagegenauigkeit dar. Daraus können beispielsweise an einer Messposition die Höhen von Fahrdrähten über Fahrbahnniveau sowie deren Seitenlagen relativ zu einer Mitte des elektrifizierten Fahrstreifens als Lagezustand ermittelt werden. Ebenso können vertikale Dicke von Fahrdrähten und/oder eine Schleifflächenbreite an der Unterseite der Fahrdrähte als Verschleißzustand der Fahrdrähte an der jeweiligen Messposition erfasst werden. Auch abmessungs- und lagebedingte Defekte von Anlagenbauteilen, wie etwa gerissene Fahrdrähte oder deformierte Streckentrenner, Spanneinrichtungen oder andere Komponenten der Oberleitungsanlage erfasst werden. Des Weiteren kann auch ermittelt werden, ob ein an einer Messposition verbautes Anlagenbauteil gänzlich fehlt, da es durch defekte Stromabnehmer von passierenden Straßenfahrzeugen oder von umgestürzten Bäumen abgerissen wurde.

In einer weiteren vorteilhaften Ausführungsform des erfindungsgemäßen Verfahrens werden mittels einer oder mehrerer Sensoreinheiten des Messfahrzeugs an Messpositionen jeweils Videodaten und/oder Wärmebilddaten und/oder elektromagnetische Felddaten von Anlagenobjekten der Oberleitungsanlage erfasst und mit den um die ermittelte Abweichung korrigierten Ortskoordinaten referenziert. Die referenzierten Sensordaten werden bei der Ermittlung der Zustandsdaten berücksichtigt. Mittels solcher Sensoreinheiten am Messfahrzeug können zusätzlich zu den durch die Sensoreinrichtung erfassten Lagedaten weitere, den aktuellen Zustand von Anlagenobjekten beschreibende Sensordaten an Messpositionen erhoben werden. Durch Korrektur der für diese Messpositionen bestimmten Ortskoordinaten um die ermittelte Abweichung zwischen den Geokoordinaten der einem erkannten Referenzobjekt zugeordneten Umgebungspunkte und dessen Referenzkoordinaten können den Sensordaten hochgenaue, korrigierte Ortskoordinaten als Referenz zugeordnet werden. Derart ortsreferenzierte Sensordaten bilden wiederum eine Ausgangsbasis für einen automatisierten Vergleich von aus den Sensordaten gewonnenen Zustandsdaten. Eine Sensoreinheit kann in Form einer Videokamera an Messpositionen Bilder als Videodaten von Anlagenobjekten aufnehmen, aus welchen durch Bildauswertungsalgorithmen Zustandsdaten der Anlagenobjekte, etwa Defekte oder Verluste, gewonnen werden können. Eine weitere Sensoreinheit kann in Form einer Thermalkamera an Messpositionen Wärmebilddaten von Anlagenobjekten aufnehmen, aus welchen beispielsweise die aktuellen Fahrdrahttemperaturen als Zustandsdaten gewonnen werden können. Eine weitere Sensoreinheit kann in Form eines Feldstärkemessgeräts an Messpositionen Feldstärkedaten eines die Fahrdrähte umgebenden elektromagnetischen Feldes messen, aus welchen ebenfalls Zustandsdaten dieser Anlagenobjekte gewonnen werden können.

In einer weiteren vorteilhaften Ausführungsform des erfindungsgemäßen Verfahrens werden bei der Ermittlung der Zustandsdaten die bei der Messfahrt an den jeweiligen Messpositionen vorherrschenden Witterungsbedingungen berücksichtigt. Als an einer Messposition vorherrschende Witterungsbedingungen können Umgebungstemperatur, Windstärke und Windrichtung, Niederschlag und dergleichen berücksichtigt werden, die den aktuellen Zustand von Anlagenobjekten beeinflussen. So bestimmen Temperatur, Wind und Eisbehang die Lagedaten von Fahrdrähten, was beim Vergleich mit vordefinierten Soll-Zustandsdaten oder mit früher erfassten Zustandsdaten berücksichtigt werden muss, um den aktuellen Zustand der Fahrdrähte aufgrund witterungsbedingter Effekte nicht als fehlerhaft zu bewerten. Die Witterungsdaten können durch weitere Sensoren direkt vom Messfahrzeug aus ermittelt werden oder aber über eine drahtlose Kommunikationsverbindung von streckenseitigen Sensoren oder von einer zentral gepflegten Datenbank bezogen werden.

In einer weiteren vorteilhaften Ausführungsform des erfindungsgemäßen Verfahrens werden bei der Ermittlung der Zustandsdaten vorausfahrende oder folgende Straßenfahrzeuge mit die Oberleitung kontaktierenden Stromabnehmern berücksichtigt. Beim Schleifkontakt werden Stromabnehmer mit einer Andruckkraft von unten gegen einen Fahrdraht gepresst, was lokal zu einem Anhub des Fahrdrahtes um das Straßenfahrzeug führt. Um die tatsächliche Fahrdrahthöhe an einer Messposition des Messfahrzeugs zu bestimmen, wird der Anhub des Fahrdrahtes durch Straßenfahrzeuge, die dem Messfahrzeug in einem Abstand mit Anhubeffekt auf die Messposition voraus- oder hinterherfahren, und gegebenenfalls durch des Messfahrzeugs selbst berücksichtigt. Damit können stets Zustandsdaten verglichen werden, die um Anhubeffekte durch den Fahrdraht beschleifende Stromabnehmer bereinigt sind. Hierzu kann das Messfahrzeug die aktuellen Ortskoordinaten von die Straßenstrecke befahrenden Straßenfahrzeugen mit angedrahtetem Stromabnehmer über eine drahtlose Kommunikationsverbindung direkt von diesen Straßenfahrzeugen übermittelt bekommen.

In einer weiteren vorteilhaften Ausführungsform des erfindungsgemäßen Verfahrens werden die ermittelten Zustandsdaten hinsichtlich eines Reparatur- oder Wartungsbedarfs bewertet, wobei bei festgestelltem Reparatur- oder Wartungsbedarfs automatisiert ein Reparatur- oder Wartungsauftrag mit Bezeichnung und Ort des betroffenen Anlagenobjekts ausgelöst wird. Die zu einer Messposition ermittelten Zustandsdaten von Anlagenobjekten können in einer fahrzeugseitigen oder in einer zentralen Auswertungseinrichtung automatisiert auf einen Reparatur- oder Wartungsbedarf bewertet werden. Ergeben die Zustandsdaten, dass beispielsweise an einer Messposition die Lage eines Fahrdrahte korrigiert oder ein defektes oder fehlendes Anlagenobjekt ersetzt werden muss, so kann ein entsprechender Auftrag automatisiert mit Angabe ausgelöst werden, wo welche Servicearbeiten durchzuführen sind, was eine erhebliche Vereinfachung der Instandhaltung der Oberleitungsanlage mit sich führt.

Weitere Vorteile und Eigenschaften der Erfindung ergeben sich aus nachfolgender Beschreibung eines Ausführungsbeispiels anhand der Zeichnungen, in deren
- FIG 1: ein Messfahrzeug mit Messsystem zur Durchführung des erfindungsgemäßen Zustandsermittlungsvefahrens und
- FIG 2: ein Ablaufdiagramm des erfindungsgemäßen Zustandsermittlungsvefahrens
schematisch veranschaulicht sind.

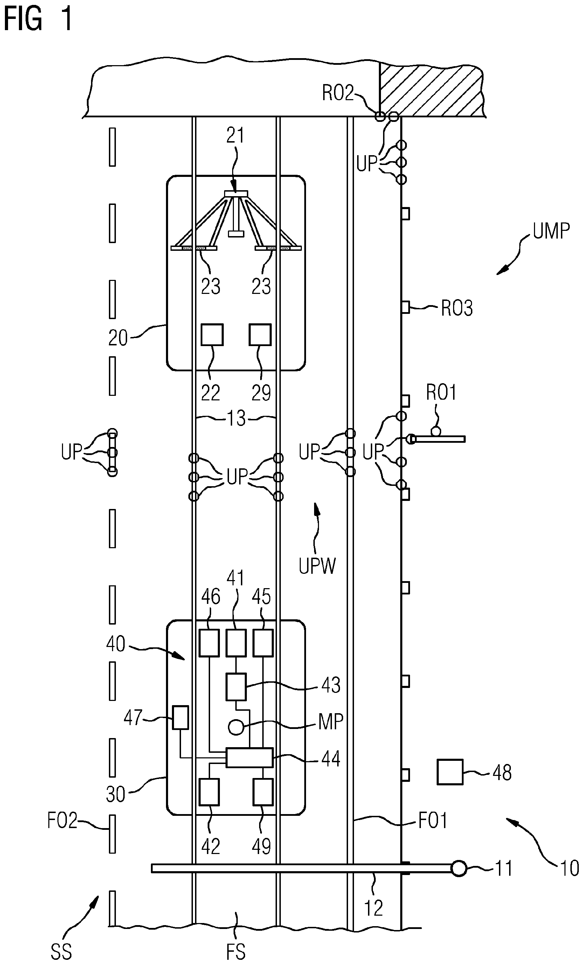

FIG 1 zeigt in Draufsicht eine Straßenstrecke SS mit einem Fahrstreifen FS, beispielsweise dem rechten Fahrstreifen einer Autobahn oder Schnellstraße. Entlang der Straßenstrecke SS ist eine elektrische Oberleitungsanlage 10 installiert, um den Fahrstreifen FS zu elektrifizieren. Die Oberleitungsanlage 10 umfasst eine Vielzahl an Anlagenobjekten. Dazu gehören seitlich des Fahrstreifens FS aufgestellte Masten 11 mit über den Fahrstreifen FS ragenden Auslegern 12. An den Auslegern 12 sind zwei parallel verlaufende Kettenwerke aufgehängt, die jeweils einen über Hänger mit einem Tragseil verbundenen Fahrdraht 13 aufweisen und an ihren Enden von Spanneinrichtungen abgespannt sind. Die beiden Fahrdrähte 13 bilden Hin- und Rückleiter der zweipolig ausgeführten Oberleitungsanlage 10, über die von einem Unterwerk eingespeiste elektrische Energie für Straßenfahrzeuge 20 mit elektrischem Antrieb, insbesondere Fahrzeuge des Schwerlastverkehrs und Busse, bereitgestellt wird. Zur Energieentnahme weisen die Straßenfahrzeuge 20 einen beispielsweise pantografenartigen Stromabnehmer 21 auf, dessen Schleifleisten 23 mittels einer Hubeinrichtung aus einer abgesenkten Ruheposition in eine aufgestellten Kontaktposition anhebbar und gegen die Fahrdrähte 13 pressbar sind. Hierzu verlaufen die Fahrdrähte 13 parallel zueinander und symmetrisch zu einer Längsmittenebene des Fahrstreifens FS und auf gleicher Höhe über dem Fahrbahnniveau. Zur Energieübertragung während der Fahrt stehen die Schleifleisten 23 des aufgestellten Stromabnehmers 21 und die Fahrdrähte 13 miteinander in Schleifkontakt.

Zur Erreichung einer hohen Verfügbarkeit der Oberleitungsanlage 10 und zur Vermeidung von Schäden oder Unfällen von die Oberleitungsanlage 10 benutzenden Straßenfahrzeugen 20 wird erfindungsgemäß an Messpositionen MP entlang der Straßenstrecke SS ein Zustand der Oberleitungsanlage 10 ermittelt. Hierzu ist ein die Straßenstrecke SS abfahrendes Messfahrzeug 30 mit einem Messystem 40 vorgesehen. Das Messystem 40 umfasst zur Datenerfassung eine Mehrzahl an Sensoren, die überwiegend fahrzeugseitig, teilweise aber auch streckenseitig angeordnet sind. Auf dem Messfahrzeug 30 ist eine beispielsweise als Lidar ausgebildete Sensoreinrichtung 41 angeordnet, die eine von der Messposition MP aus erfassbare Fahrzeugumgebung UMP abtastet, um dreidimensionale Lagedaten LD von Umgebungspunkten UP der Fahrzeugumgebung UMP zu gewinnen. Auf dem Messfahrzeug 30 ist ferner eine beispielsweise als GPS-Empfänger ausgebildete, satellitengestützte Positionsbestimmungseinrichtung 42 angeordnet, um Ortskoordinaten OK der Messposition MP zu bestimmen. Durch Zuordnung der Ortskoordinaten OK zu den Lagedaten LD wird eine dichte Umgebungspunktwolke UPW mit Geokoordinaten GK der erfassten Umgebungspunkte UP erzeugt, welche Umgebungsobjekte der Fahrzeugumgebung UMP darstellt. Auf dem Messfahrzeug 30 ist des Weiteren eine Objekterkennungseinrichtung 43 zur Erkennung von Umgebungsobjekten aus den Geokoordinaten GK der erzeugten Umgebungspunktwolke UPW angeordnet, beispielsweise durch eine trainierte künstliche Intelligenz gebildet. Insbesondere werden in der Fahrzeugumgebung UMP präsente, ortsfeste Referenzobjekte RO1, RO2, RO3 mit bekannten, hochgenauen Referenzkoordinaten RK und in der Fahrzeugumgebung UMP präsente Anlagenobjekte 11, 12, 13 der Oberleitungsanlage 10 erkannt. Als Referenzobjekte dienen ortsfeste, eindeutig erkennbare Objekte, wie Schildermasten RO1, Brückensockel RO2, Rückhaltesysteme RO3, und dergleichen. Die Geokoordinaten GK der einem erkannten Referenzobjekt RO1, RO2, RO3 zugeordneten Umgebungspunkte UP werden nun mit dessen Referenzkoordinaten RK verglichen und eine mögliche Abweichung ΔGR ermittelt. Diese dient als Korrekturwert für die Geokoordinaten GK, die auf Basis der vergleichsweise ungenauen Ortkoordinaten OK der Messposition MP ermittelt wurden. Mittels der Objekterkennungseinrichtung 43 werden aus den derart korrigierten Geokoordinaten GK' der Anlagenobjekte 11, 12, 13 Zustandsdaten ZD der Oberleitungsanlage 10 ermittelt, was beispielsweise durch Vergleich der korrigierten Geokoordinaten GK' des Anlagenobjekts 11, 12, 13 mit vordefinierten, aus Planungsdaten der Oberleitungsanlage 10 bekannten Soll-Zustandsdaten ZD! oder mit in einer früheren Messfahrt aufgenommenen korrigierten Geokoordinaten GK'* dieses Anlagenobjekts erfolgt. Als Zustandsdaten ZD können beispielsweise eine Lage und/oder ein Verschleiß und/oder ein Defekt und/oder ein Verlust eines Anlagenobjekts 11, 12, 13 der Oberleitungsanlage 10 ermittelt werden. Mittels der Objekterkennungseinrichtung 44 werden aus der Umgebungspunktwolke UPW auch Fahrbahnmarkierungsobjekte der Straßenstrecke SS, etwa die den elektrifizierten Fahrstreifen FS begrenzende Seitenlinie FO1 und Mittellinie FO2 erkannt, deren korrigierte Geokoordinaten GK' als Bezugslinie für die Zustandsdaten ZD der Anlagenobjekte 11, 12, 13 verwendet werden kann.

Auf dem Messfahrzeug 30 sind ferner eine als Videokamera ausgebildete Sensoreinheit 45 zur Erfassung von Videodaten VD, eine als Thermalkamera ausgebildete Sensoreinheit 46 zur Erfassung von Wärmebilddaten TD sowie eine als Feldmessgerät ausgebildete Sensoreinheit 47 zur Erfassung von elektromagnetischen Felddaten von Anlageobjekten 11, 12, 13 der Oberleitungsanlage 10 angeordnet. Die erfassten Videodaten VD, Wärmebilddaten TD und Felddaten FD erhalten die um die Abweichung ΔGR korrigierten Ortskoordinaten OK als Referenz, um daraus ebenfalls Zustandsdaten ZD der Anlageobjekten 11, 12, 13 zu gewinnen, die sich in ihrer Lage oder Temperatur oder der Stärke eines sie umgebenden elektromagnetischen Feldes widerspiegeln.

Seitlich der Straßenstrecke SS kann eine Wetterdaten WD erfassende Sensorvorrichtung 48 angeordnet sein, die beispielsweise Umgebungstemperatur, Windstärke und Windrichtung, Niederschlag und dergleichen misst. Mittels einer Kommunikationseinrichtung 49 des Messfahrzeugs 30 können die Wetterdaten WD drahtlos von der Sensorvorrichtung 48 an das Messfahrzeug 30 übermittelt werden, um bei der Zustandsermittlung von Anlagenobjekten 11, 12, 13 berücksichtigt zu werden. Mittels der Kommunikationsvorrichtung 49 können auch Ortskoordinaten von die Straßenstrecke SS ebenfalls befahrenden Straßenfahrzeuge 20 empfangen werden, welche durch eine Positionsbestimmungseinrichtung 22 des Straßenfahrzeugs 20 bestimmt und mittels einer Kommunikationseinrichtung 29 des Straßenfahrzeugs 20 ausgesendet werden. Durch die sich aus dem Vergleich der Ortskoordinaten ergebende Entfernung vom Messfahrzeug 30 kann bei der Ermittlung der Zustandsdaten ZD ein Anhubeffekt auf die Fahrdrähte 13 durch den Stromabnehmer 21 des Straßenfahrzeugs 20 berücksichtigt werden.

In einer Auswertungseinrichtung 44 des Messfahrzeugs 30 werden die ermittelten Zustandsdaten ZD hinsichtlich eines Reparatur- oder Wartungsbedarfs bewertet. Wird ein solcher diagnostiziert kann automatisch ein Reparatur- oder Wartungsauftrag RW mit Bezeichnung und Ort des betroffenen Anlagenobjekts 11, 12, 13 ausgelöst.

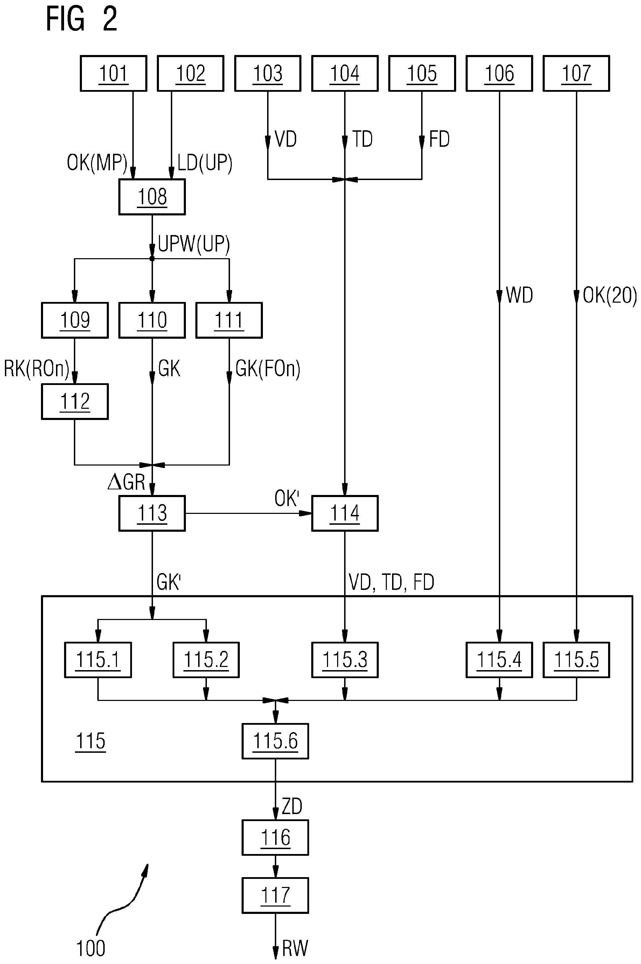

Das erfindungsgemäße Verfahren 100 zur Zustandserfassung einer Oberleitungsanlage 10 umfasst gemäß FIG 2 eine Vielzahl an Verfahrensschritten, während ein Messfahrzeug 30 mit Messsystem 40 eine Straßenstrecke SS abfährt. Mittels der Sensoreinrichtung 41 werden an Messpositionen MP in einem Schritt 101 jeweils dreidimensionale Lagedaten LD von eine Fahrzeugumgebung UMP repräsentierenden Umgebungspunkten UP erfasst. In einem Schritt 102 werden mittels der satellitengestützten Positionsbestimmungseinrichtung 42 Ortskoordinaten OK der Messpositionen MP bestimmt. In einem Schritt 108 wird durch Zuordnung der Ortskoordinaten OK einer Messposition MP zu den an dieser Messposition MP erfassten Lagedaten LD eine Umgebungspunktwolke UPW mit Geokoordinaten GK der erfassten Umgebungspunkte UP erzeugt. Mittels der Objekterkennungseinrichtung 43 werden aus den Geokoordinaten GK der erzeugten Umgebungspunktwolke UPW in einem Schritt 109 ein oder mehrere in der Fahrzeugumgebung UMP präsente, ortsfeste Referenzobjekte mit bekannten Referenzkoordinaten RK erkannt, beispielsweise Schildermasten RO1, Brückensockel RO2, Rückhaltesysteme RO3 der Straßenstrecke SS, und in einem Schritt 110 ein oder mehrere in der Fahrzeugumgebung UMP präsente Anlagenobjekte der Oberleitungsanlage 10, beispielsweise Masten 11, Ausleger 12, Fahrdrähte 13 und der gleichen, erkannt. In einem Schritt 112 wird eine Abweichung ΔGR der Geokoordinaten GK der einem erkannten Referenzobjekt RO1, RO2, RO3 zugeordneten Umgebungspunkte UP von dessen Referenzkoordinaten RK ermittelt und in einem Schritt 113 werden die Geokoordinaten GK aller Umgebungspunkte UP der Umgebungspunktwolke UPW um die ermittelte Abweichung ΔGR korrigiert. Mittels der Objekterkennungseinrichtung 43 werden in einem Schritt 115 aus den korrigierten Geokoordinaten GK' der Anlagenobjekte 11, 12, 13 Zustandsdaten ZD der Anlagenobjekte 11, 12, 13 ermittelt, beispielsweise eine Lage und/oder ein Verschleiß und/oder ein Defekt und/oder ein Verlust von Anlagenobjekten 11, 12, 13.

Unter den Schritt 115 sind mehrere untergeordnete Schritte 115.n, n = 1, ..., 6 subsummiert. In einem Schritt 115.1 werden Zustandsdaten ZD eines Anlagenobjekts 11, 12, 13 aus einem Vergleich der korrigierten Geokoordinaten GK' des Anlagenobjekts 11, 12, 13 mit vordefinierten Soll-Zustandsdaten ZD! des Anlagenobjekts 11, 12, 13 ermittelt. In einem Schritt 115.2 werden Zustandsdaten ZD eines Anlagenobjekts 11, 12, 13 aus einem Vergleich der korrigierten Geokoordinaten GK' des Anlagenobjekts 11, 12, 13 mit in einer früheren Messfahrt aufgenommenen korrigierten Geokoordinaten GK'* dieses Anlagenobjekts 11, 12, 13 ermittelt.

In einem Schritt 115.6 werden die korrigierten Geokoordinaten GK' von Fahrbahnmarkierungsobjekten FO1, FO2 als Bezugslinie für die Zustandsdaten ZD der Anlagenobjekte 11, 12, 13 verwendet. Hierzu wurden in einem Schritt 111 mittels der Objekterkennungseinrichtung 43 aus den Geokoordinaten GK der erzeugten Umgebungspunktwolke UPW die Fahrbahnmarkierungsobjekte FO1, FO2 der Straßenstrecke SS erkannt.

In einem Schritt 115.3 werden weitere ortsreferenzierte Sensordaten bei der Ermittlung der Zustandsdaten ZD berücksichtigt. Hierfür werden in einem Schritt 103 mittels einer als Videokamera ausgebildeten Sensoreinheit 45 an Messpositionen MP jeweils Videodaten von Anlagenobjekten 11, 12, 13 der Oberleitungsanlage 10 erfasst. In einem Schritt 104 werden mittels einer als Thermokamera ausgebildeten Sensoreinheit 46 an Messpositionen MP jeweils Wärmebilddaten von Anlagenobjekten 11, 12, 13 der Oberleitungsanlage 10 erfasst. In einem Schritt 105 werden mittels einer als Feldmessgerät ausgebildeten Sensoreinheit 47 an Messpositionen MP jeweils elektromagnetische Felddaten FD zu Anlagenobjekten 11, 12, 13 der Oberleitungsanlage 10 erfasst. In einem Schritt 114 werden die erfassten Videodaten VD und/oder Wärmebilddaten TD und/oder elektromagnetischen Felddaten FD mit den um die ermittelte Abweichung ΔGR korrigierten Ortskoordinaten OK referenziert.

In einem Schritt 115.4 werden bei der Ermittlung der Zustandsdaten ZD die bei der Messfahrt an den jeweiligen Messpositionen MP vorherrschenden Witterungsbedingungen berücksichtigt. Hierfür werden in einem Schritt 106 mittels einer als Wetterstation ausgebildeten Sensorvorrichtung 48 für die Messposition MP gültige Wetterdaten WD, beispielsweise Umgebungstemperatur, Windstärke und -richtung, sowie Niederschlag, erfasst.

In einem Schritt 115.5 werden bei der Ermittlung der Zustandsdaten ZD vorausfahrende oder folgende Straßenfahrzeuge 20 mit die Oberleitung 10 kontaktierenden Stromabnehmern 21 berücksichtigt werden. Hierfür werden in einem Schritt 107 von der Kommunikationseinrichtung 49 des Messfahrzeugs 30 Ortskoordinaten empfangen, die mittels der Kommunikationseinrichtung 29 dieser Straßenfahrzeuge 20 übermittelt wurden, um aufgrund ihrer Entfernung zum Messfahrzeug 30 den Anhubeffekt auf die Fahrdrähte 13 an der Messposition MP zu bestimmen.

In einem Schritt 116 werden die ermittelten Zustandsdaten ZD in einer Auswertungseinrichtung 44 des Messfahrzeugs 30 hinsichtlich eines Reparatur- oder Wartungsbedarfs von Anlagenobjekten 11, 12, 13 bewertet. Bei festgestelltem Reparatur- oder Wartungsbedarfs wird in einem Schritt 117 automatisiert ein Reparatur- oder Wartungsauftrag RW mit Bezeichnung und Ort MP des betroffenen Anlagenobjekts 11, 12, 13 ausgelöst.

## Patentansprüche

1. Verfahren (100) zur Erfassung von Zustandsdaten (ZD) einer entlang einer Straßenstrecke (SS) installierten, elektrischen Oberleitungsanlage (10), welche zur Energieübertragung durch einen Stromabnehmer (21) eines die Straßenstrecke (SS) befahrenden, elektrisch oder hybridelektrisch angetriebenen Straßenfahrzeugs (20) kontaktierbar ist,
- wobei mittels einer Sensoreinrichtung (41) eines die Straßenstrecke (SS) abfahrenden Messfahrzeugs (30) an Messpositionen (MP) jeweils dreidimensionale Lagedaten (LD) von eine Fahrzeugumgebung (UMP) repräsentierenden Umgebungspunkten (UP) erfasst werden (Schritt 102),
- wobei mittels einer satellitengestützten Positionsbestimmungseinrichtung (42) des Messfahrzeugs (30) Ortskoordinaten (OK) der Messpositionen (MP) bestimmt werden (Schritt 101),
- wobei durch Zuordnung der Ortskoordinaten (OK) einer Messposition (MP) zu den an dieser Messposition (MP) erfassten Lagedaten (LD) eine Umgebungspunktwolke (UPW) mit Geokoordinaten (GK) der erfassten Umgebungspunkte (UP) erzeugt wird (Schritt 108),
- wobei mittels einer Objekterkennungseinrichtung (43) aus den Geokoordinaten (GK) der erzeugten Umgebungspunktwolke (UPW)
- ein oder mehrere in der Fahrzeugumgebung (UMP) präsente, ortsfeste Referenzobjekte (RO1, RO2, RO3) mit bekannten Referenzkoordinaten (RK) und
- ein oder mehrere in der Fahrzeugumgebung (UMP) präsente Anlagenobjekte (11, 12, 13) der Oberleitungsanlage (10)
erkannt werden (Schritte 109, 110),
- wobei eine Abweichung (ΔGR) der Geokoordinaten (GK) der einem erkannten Referenzobjekt (RO1, RO2, RO3) zugeordneten Umgebungspunkte (UP) von dessen Referenzkoordinaten (RK) ermittelt (Schritt 112) und die Geokoordinaten (GK) aller Umgebungspunkte (UP) der Umgebungspunktwolke (UPW) um die ermittelte Abweichung (ΔGR) korrigiert werden (Schritt 113), und
- wobei mittels der Objekterkennungseinrichtung (43) aus den korrigierten Geokoordinaten (GK') der Anlagenobjekte (11, 12, 13) Zustandsdaten (ZD) der Anlagenobjekte (11, 12, 13) ermittelt werden (Schritt 115).

2. Verfahren (100) nach dem vorangehenden Anspruch,
- wobei Zustandsdaten (ZD) eines Anlagenobjekts (11, 12, 13) aus einem Vergleich der korrigierten Geokoordinaten (GK') des Anlagenobjekts (11, 12, 13) mit vordefinierten Soll-Zustandsdaten (ZD!) des Anlagenobjekts (11, 12, 13) ermittelt werden (Schritt 115.1).

3. Verfahren (100) nach einem der vorangehenden Ansprüche,
- wobei Zustandsdaten (ZD) eines Anlagenobjekts (11, 12, 13) aus einem Vergleich der korrigierten Geokoordinaten (GK') des Anlagenobjekts (11, 12, 13) mit in einer früheren Messfahrt aufgenommenen korrigierten Geokoordinaten (GK'*) dieses Anlagenobjekts (11, 12, 13) ermittelt werden (Schritt 115.2).

4. Verfahren (100) nach einem der vorangehenden Ansprüche,
- wobei mittels der Objekterkennungseinrichtung (43) aus den Geokoordinaten (GK) der erzeugten Umgebungspunktwolke (UPW) ein oder mehrere Fahrbahnmarkierungsobjekte (FO1, FO2) der Straßenstrecke (SS) erkannt werden (Schritt 111),
- wobei die korrigierten Geokoordinaten (GK') der Fahrbahnmarkierungsobjekte (FO1, FO2) als Bezugslinie für die Zustandsdaten (ZD) der Anlagenobjekte (11, 12, 13) verwendet werden (Schritt 115.6).

5. Verfahren (100) nach einem der vorangehenden Ansprüche,
- wobei als Referenzobjekte Masten (11) der Oberleitungsanlage (10) und/oder Schildermasten (RO1) an der Straßenstrecke (SS) und/oder die Straßenstrecke (SS) überspannende Brücken (RO2) und/oder Rückhaltesysteme (RO3) der Straßenstrecke (SS) erkannt werden.

6. Verfahren (100) nach einem der vorangehenden Ansprüche,
- wobei als Zustandsdaten (ZD) eine Lage und/oder ein Verschleiß und/oder ein Defekt und/oder ein Verlust eines Anlagenobjekts (11, 12, 13) der Oberleitungsanlage (10) ermittelt wird.

7. Verfahren (100) nach einem der vorangehenden Ansprüche,
- wobei mittels einer oder mehrerer Sensoreinheiten (45, 46, 47) des Messfahrzeugs (30) an Messpositionen (MP) jeweils Videodaten (VD) und/oder Wärmebilddaten (TD) und/oder elektromagnetische Felddaten (FD) von Anlagenobjekten (11, 12, 13) der Oberleitungsanlage (10) erfasst werden (Schritte 103, 104, 105),
- wobei die erfassten Videodaten (V) und/oder Wärmebilddaten (TD) und/oder elektromagnetische Felddaten (FD) mit den um die ermittelte Abweichung (ΔGR) korrigierten Ortskoordinaten (OK) referenziert werden (Schritt 114), und
- wobei die referenzierten Videodaten (VD) und/oder Wärmebilddaten (TD) und/oder elektromagnetische Felddaten (FD) bei der Ermittlung der Zustandsdaten (ZD) berücksichtigt werden (Schritt 115.3).

8. Verfahren (100) nach einem der vorangehenden Ansprüche,
- wobei bei der Ermittlung der Zustandsdaten (ZD) die bei der Messfahrt an den jeweiligen Messpositionen (MP) vorherrschenden Witterungsbedingungen berücksichtigt werden (Schritt 115.4).

9. Verfahren (100) nach einem der vorangehenden Ansprüche,
- wobei bei der Ermittlung der Zustandsdaten (ZD) vorausfahrende oder folgende Straßenfahrzeuge (20) mit die Oberleitung (13) kontaktierenden Stromabnehmern (21) berücksichtigt werden (Schritt 115.5).

10. Verfahren (100) nach einem der vorangehenden Ansprüche,
- wobei die ermittelten Zustandsdaten (ZD) hinsichtlich eines Reparatur- oder Wartungsbedarfs bewertet werden (Schritt 116), und
- wobei bei festgestelltem Reparatur- oder Wartungsbedarfs automatisiert ein Reparatur- oder Wartungsauftrag (RW) mit Bezeichnung und Ort (MP) des betroffenen Anlagenobjekts (11, 12, 13) ausgelöst wird (Schritt 117).

## Claims

1. Method (100) for acquiring state data (ZD) of an electrical overhead line system (10) installed along a stretch of road (SS), with which overhead line system a current collector (21) of an electrically or hybrid-electrically driven road vehicle (20) travelling along the stretch of road (SS) can be brought into contact for power transmission purposes,
- wherein, by means of a sensor facility (41) of a measurement vehicle (30) traversing the stretch of road (SS), three-dimensional location data (LD) of environment points (UP) representing a vehicle environment (UMP) is acquired (step 102) in each case at measurement points (MP),
- wherein, by means of a satellite-based position determination facility (42) of the measurement vehicle (30), spatial coordinates (OK) of the measurement positions (MP) are determined (step 101),
- wherein, by assigning the spatial coordinates (OK) of a measurement position (MP) to the location data (LD) acquired at this measurement position (MP), an environment point cloud (UPW) with geocoordinates (GK) of the acquired environment points (UP) is generated (step 108),
- wherein, by means of an object recognition facility (43),
- one or several fixed reference objects (RO1, RO2, RO3) with known reference coordinates (RK) present in the vehicle environment (UMP) and
- one or several system objects (11, 12, 13) of the overhead line system (10) present in the vehicle environment (UMP)
are recognised (steps 109, 110) from the geocoordinates (GK) of the environment point cloud (UPW) generated,
- wherein a deviation (ΔGR) of the geocoordinates (GK) of the environment points (UP) assigned to a recognised reference object (RO1, RO2, RO3) from the reference coordinates (RK) thereof is ascertained (step 112) and the geocoordinates (GK) of all environment points (UP) of the environment point cloud (UPW) are corrected (step 113) by the deviation (ΔGR) ascertained, and
- wherein, by means of the object recognition facility (43), state data (ZD) of the system objects (11, 12, 13) is ascertained (step 115) from the corrected geocoordinates (GK') of the system objects (11, 12, 13).

2. Method (100) according to the preceding claim,
- wherein state data (ZD) of a system object (11, 12, 13) is ascertained (step 115.1) from a comparison of the corrected geocoordinates (GK') of the system object (11, 12, 13) with predefined target state data (ZD!) of the system object (11, 12, 13).

3. Method (100) according to one of the preceding claims,
- wherein state data (ZD) of a system object (11, 12, 13) is ascertained (step 115.2) from a comparison of the corrected geocoordinates (GK') of the system object (11, 12, 13) with corrected geocoordinates (GK'*) of said system object (11, 12, 13) recorded in an earlier measurement run.

4. Method (100) according to one of the preceding claims,
- wherein by means of the object detection facility (43), one or several roadway marking objects (FO1, FO2) of the stretch of road (SS) are recognised (step 111) from the geocoordinates (GK) of the environment point cloud (UPW) generated,
- wherein the corrected geocoordinates (GK') of the roadway marking objects (FO1, FO2) are used (step 115.6) as a reference line for the state data (ZD) of the system objects (11, 12, 13).

5. Method (100) according to one of the preceding claims,
- wherein masts (11) of the overhead line system (10) and/or signposts (RO1) on the stretch of road (SS) and/or bridges (RO2) spanning the stretch of road (SS) and/or restraint systems (RO3) of the stretch of road (SS) are recognised as reference objects.

6. Method (100) according to one of the preceding claims,
- wherein a location and/or a wear and/or a defect and/or a loss of a system object (11, 12, 13) of the overhead line system (10) is ascertained as state data (ZD).

7. Method (100) according to one of the preceding claims,
- wherein, by means of one or several sensor units (45, 46, 47) of the measurement vehicle (30), video data (VD) and/or thermal imaging data (TD) and/or electromagnetic field data (FD) of system objects (11, 12, 13) of the overhead line system (10) is acquired (steps 103, 104, 105) in each case at measurement positions (MP),
- wherein the acquired video data (V) and/or thermal imaging data (TD) and/or electromagnetic field data (FD) is referenced (step 114) with the spatial coordinates (OK) corrected by the deviation (ΔGR) ascertained, and
- wherein the referenced video data (VD) and/or thermal imaging data (TD) and/or electromagnetic field data (FD) is considered (step 115.3) when determining the state data (ZD).

8. Method (100) according to one of the preceding claims,
- wherein the weather conditions prevailing at the respective measurement positions (MP) during the measurement run are considered (step 115.4) when ascertaining the state data (ZD).

9. Method (100) according to one of the preceding claims,
- wherein road vehicles (20) travelling ahead or behind with current collectors (21) in contact with the overhead line (13) are considered (step 115.5) when ascertaining the state data (ZD) .

10. Method (100) according to one of the preceding claims,
- wherein the state data (ZD) ascertained is evaluated (step 116) with respect to a repair or maintenance requirement, and
- wherein, if a repair or maintenance requirement is identified, a repair or maintenance order (RW) with the designation and location (MP) of the affected system object (11, 12, 13) is automatically triggered (step 117).

## Revendications

1. Procédé (100) de détection de données (ZD) d'état d'une installation (10) électrique de ligne de trolley installée le long d'un tronçon (SS) de route, qui peut, pour le transport d'énergie, être mise en contact avec un appareil (21) de prise de courant d'un véhicule (20) routier électrique ou hybride empruntant le tronçon (SS) de route,
- dans lequel, au moyen d'un dispositif (41) capteur d'un véhicule (30) de mesure parcourant le tronçon (SS) de route, on détecte (stade 102), en des positions (MP) de mesure, respectivement des données (LD) de position en trois dimensions de points (UP) d'environnement représentant un environnement (UMP) du véhicule,
- dans lequel, au moyen d'un dispositif (42) de détermination de position assisté par satellite du véhicule (30) de mesure, on détermine (stade 101) des coordonnées (OK) spatiales des positions (MP) de mesure,
- dans lequel, en associant des coordonnées (OK) spatiales d'une position (MP) de mesure aux données (LD) de position détectées en cette position (MP) de mesure, on produit (stade 108) un nuage (UPW) de points d'environnement par des géo-coordonnées (GK) des points (UP) d'environnement détectés,
- dans lequel, au moyen d'un dispositif (43) de reconnaissance d'objet, on reconnaît (stades 109, 110), à partir des géo-coordonnées (GK) du nuage (UPW) de points d'environnement produit,
- un ou plusieurs objets (RO1, RO2, RO3) de référence fixes en position présents dans l'environnement (UMP) du véhicule par des coordonnées (RK) de référence connues et
- un ou plusieurs objets (11, 12, 13) de l'installation (10) de ligne de trolley présents dans l'environnement (UMP) du véhicule,
- dans lequel on détermine (stade 112) un écart (ΔGR) des géo-coordonnées (GK) des points (UP) d'environnement, affectés à un objet (RO1, RO2, RO3) de référence reconnu, par ces coordonnées (RK) de référence et on corrige (stade 113) de l'écart (ΔGR) déterminé les géo-coordonnées (GK) de tous les points (UP) d'environnement du nuage (UPW) de points d'environnement produit, et
- dans lequel, au moyen du dispositif (43) de reconnaissance d'objet, on détermine (stade 115), à partir des géo-coordonnées (GK') corrigées des objets (11, 12, 13) de l'installation, des données (ZD) d'état des objets (11, 12, 13) de l'installation.

2. Procédé (100) suivant la revendication précédente,
- dans lequel on détermine (stade 115.1) des données (ZD) d'état d'un objet (11, 12, 13) de l'installation en comparant les géo-coordonnées (GK') corrigées de l'objet (11, 12, 13) de l'installation à des données (ZD!) d'état de consigne définies à l'avance de l'objet (11, 12, 13) de l'installation.

3. Procédé (100) suivant l'une des revendications précédentes,
- dans lequel on détermine (stade 115.2) des données (ZD) d'état d'un objet (11, 12, 13) de l'installation en comparant les géo-coordonnées (GK') corrigées de l'objet (11, 12, 13) de l'installation à des géo-coordonnées (GK'*) corrigées, enregistrées dans un parcours antérieur de mesure, de cet objet (11, 12, 13) de l'installation.

4. Procédé (100) suivant l'une des revendications précédentes,
- dans lequel, au moyen du dispositif (43) de reconnaissance d'objet, on reconnaît (stade 111), à partir des géo-coordonnées (GK) du nuage (UPW) de points d'environnement produit, un ou plusieurs objets (FO1, FO2) de repérage de voie de circulation du tronçon (SS) de route,
- dans lequel on utilise (stade 115.6) les géo-coordonnées (GK') corrigées des objets (FO1, FO2) de repérage de voie de circulation comme ligne de référence pour les données (ZD) d'état des objets (11, 12, 13) de l'installation.

5. Procédé (100) suivant l'une des revendications précédentes,
- dans lequel on reconnaît, comme objets de référence, des mâts (11) de l'installation (10) de ligne de trolley et/ou des mâts (RO1) portant des panneaux sur le tronçon (SS) de route et/ou des ponts (RO2) pontant le tronçon (SS) de route et/ou des systèmes (RO3) de retenue du tronçon (SS) de route.

6. Procédé (100) suivant l'une des revendications précédentes,
- dans lequel on détermine, comme données (ZD) d'état, une position et/ou une usure et/ou un défaut et/ou une perte d'un objet (11, 12, 13) de l'installation (10) de ligne de trolley.

7. Procédé (100) suivant l'une des revendications précédentes,
- dans lequel, au moyen d'une ou de plusieurs unités (45, 46, 47) de capteur du véhicule (30) de mesure, on détecte (stades 103, 104, 105), en des positions (MP) de mesure, respectivement des données (VD) vidéo et/ou des données (TD) d'image de chaleur et/ou des données (FD) de champ électromagnétique d'objets (11, 12, 13) de l'installation (10) de ligne de trolley,
- dans lequel on référencie (stade 114) les données (V) vidéo et/ou les données (TD) d'image de chaleur et/ou les données (FD) de champ électromagnétique détectées par les coordonnées (OK) spatiales corrigées de l'écart (ΔGR) déterminé, et
- dans lequel on tient compte (stade 115.3) des données (VD) vidéo et/ou des données (TD) d'image de chaleur et/ou des données (FD) de champ électromagnétique référencées lors de la détermination des données (ZD) d'état.

8. Procédé (100) suivant l'une des revendications précédentes,
- dans lequel, lors de la détermination des données (ZD) d'état, on tient compte (stade 115.4) des conditions météorologies régnant aux positions (MP) respectives de mesure lors du parcours de mesure.

9. Procédé (100) suivant l'une des revendications précédentes,
- dans lequel, lors de la détermination des données (ZD) d'état, on tient compte (stade 115.5) de véhicules (20) routiers précédents ou suivants ayant des appareils (21) de prise de courant en contact avec la ligne (13) de trolley.

10. Procédé (100) suivant l'une des revendications précédentes,
- dans lequel on évalue (stade 116) les données (ZD) d'état déterminées en ce qui concerne un besoin de réparation ou d'entretien, et
- on déclenche (stade 117), si l'on constate un besoin de réparation ou d'entretien, d'une manière automatisée, un ordre (RW) de réparation ou d'entretien avec indication et emplacement (MP) de l'objet (11, 12, 13) de l'installation concernée.
